(19) Europäisches Patentamt
European Patent Office
Office européen des brevets

(11) **EP 4 542 881 A1**

(12) **EUROPEAN PATENT APPLICATION**
published in accordance with Art. 153(4) EPC

(43) Date of publication:
**23.04.2025 Bulletin 2025/17**

(21) Application number: **23826918.7**

(22) Date of filing: **30.05.2023**

(51) International Patent Classification (IPC):
*H04B 10/80* (2013.01)     *G02B 6/42* (2006.01)
*H02J 50/30* (2016.01)

(52) Cooperative Patent Classification (CPC):
**G02B 6/42; H02J 50/30; H04B 10/80**

(86) International application number:
**PCT/JP2023/020041**

(87) International publication number:
**WO 2023/248730 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.06.2022 JP 2022098854**

(71) Applicant: **Kyocera Corporation
Kyoto-shi, Kyoto 612-8501 (JP)**

(72) Inventors:
• **KIMURA Yoshiyuki
Kyoto-shi, Kyoto 612-8501 (JP)**
• **YAMAJI Hiroyuki
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **POWER RECEIVING DEVICE, OPTICAL POWER SUPPLY SYSTEM, AND POWER RECEIVING METHOD**

(57)     A powered device includes a first light receiver, a second light receiver, and a demodulator. The first light receiver converts feed light incident thereon into electric power. The second light receiver converts the feed light into an electrical signal. The demodulator demodulates the electrical signal converted by the second light receiver, and acquires information. The information is superimposed on the feed light in advance by modulation.

FIG. 1

EP 4 542 881 A1

## Description

TECHNICAL FIELD

The present disclosure relates to a powered device, an optical power feeding system, and a power receiving method.

BACKGROUND OF INVENTION

Recently, an optical power feeding system has been studied in which electric power is converted into light (called feed light), the feed light is transmitted and is converted into electric energy, and the electric energy is used as electric power.

Patent Literature 1 describes an optical communication device including an optical transmitter, an optical fiber, and an optical receiver. The optical transmitter transmits signal light modulated based on an electrical signal and feed light for supplying electric power. The optical fiber includes a core, a first cladding, and a second cladding. The core transmits the signal light. The first cladding is formed around the core, has a lower refractive index than the core, and transmits the feed light. The second cladding is formed around the first cladding, and has a lower refractive index than the first cladding. The optical receiver operates with electric power converted from the feed light transmitted through the first cladding of the optical fiber, and converts the signal light transmitted through the core of the optical fiber into the electrical signal.

CITATION LIST

PATENT LITERATURE

Patent Literature 1: Japanese Unexamined Patent Application Publication No. 2010-135989

SUMMARY

PROBLEM TO BE SOLVED

It is useful if an optical power feeding system can simultaneously transmit electric power and information by inserting information on feed light.

The present disclosure enables simultaneous transmission of electric power and information via feed light.

SOLUTION TO PROBLEM

According to the present disclosure, a powered device includes a first light receiver, a second light receiver, and a demodulator.

The first light receiver converts feed light incident thereon into electric power.

The second light receiver converts the feed light into an electrical signal.

The demodulator demodulates the electrical signal converted by the second light receiver, and acquires information.

The information is superimposed on the feed light in advance by modulation.

According to the present disclosure, an optical power feeding system includes power sourcing equipment and a powered device.

The power sourcing equipment outputs feed light on which information is superimposed by modulation.

The powered device includes a first light receiver, a second light receiver, and a demodulator.

The first light receiver converts the feed light incident thereon into electric power.

The second light receiver converts the feed light reflected by a light receiving surface of the first light receiver into an electrical signal.

The demodulator demodulates the electrical signal converted by the second light receiver, and acquires the information.

According to the present disclosure, an optical power feeding system includes

power sourcing equipment and a powered device.

The power sourcing equipment outputs feed light on which information is superimposed by modulation.

The powered device includes a first light receiver, a second light receiver, and a demodulator.

The first light receiver converts the feed light incident thereon into electric power.

The second light receiver converts the feed light transmitted through a light receiving surface of the first light receiver into an electrical signal.

The demodulator demodulates the electrical signal converted by the second light receiver, and acquires the information.

According to the present disclosure, a power receiving method includes

at a first light receiver, receiving feed light on which information is superimposed in advance by modulation, and converting the feed light into electric power;
at a second light receiver, receiving the feed light reflected by a light receiving surface of the first light receiver, and converting the feed light into an electrical signal; and
demodulating the electrical signal converted at the second light receiver, and acquiring the information.

According to the present disclosure, a power receiving method includes

at a first light receiver, receiving feed light on which information is superimposed in advance by modulation, and converting the feed light into electric power;
at a second light receiver, receiving the feed light transmitted through a light receiving surface of the first light receiver, and converting the feed light into an electrical signal; and

demodulating the electrical signal converted at the second light receiver, and acquiring the information.

ADVANTAGEOUS EFFECT

According to the present disclosure, electric power and information can be simultaneously transmitted via feed light.

BRIEF DESCRIPTION OF THE DRAWINGS

FIG. 1 is a configuration diagram of an optical power feeding system according to a first embodiment of the present disclosure.
FIG. 2 is a diagram illustrating an example of an output waveform of feed light according to the first embodiment of the present disclosure.
FIG. 3A is a diagram illustrating a light receiving chamber according to the first embodiment of the present disclosure.
FIG. 3B is a diagram illustrating a variation of the light receiving chamber according to the first embodiment of the present disclosure.
FIG. 3C is a diagram illustrating a variation of the light receiving chamber according to the first embodiment of the present disclosure.
FIG. 3D is a diagram illustrating a variation of the light receiving chamber according to the first embodiment of the present disclosure.
FIG. 4 is a configuration diagram of an optical power feeding system according to a second embodiment of the present disclosure.
FIG. 5A is a diagram illustrating a variation or the like of a light receiving chamber according to the second embodiment of the present disclosure.
FIG. 5B is a diagram illustrating a variation or the like of the light receiving chamber according to the second embodiment of the present disclosure.
FIG. 5C is a diagram illustrating a variation or the like of the light receiving chamber according to the second embodiment of the present disclosure.
FIG. 6 is a configuration diagram of an optical power feeding system according to a third embodiment of the present disclosure.
FIG. 7 is a configuration diagram of the optical power feeding system according to the third embodiment of the present disclosure, and illustrates optical connectors, etc.
FIG. 8A is a diagram illustrating a variation or the like of a second light receiver according to the first embodiment of the present disclosure.
FIG. 8B is a diagram illustrating a variation or the like of the second light receiver according to the first embodiment of the present disclosure.
FIG. 8C is a diagram illustrating a variation or the like of the second light receiver according to the first embodiment of the present disclosure.
FIG. 9A is a diagram illustrating a variation or the like of a second light receiver according to the second embodiment of the present disclosure.
FIG. 9B is a diagram illustrating a variation or the like of the second light receiver according to the second embodiment of the present disclosure.

DESCRIPTION OF EMBODIMENTS

An embodiment of the present disclosure is described below with reference to the drawings.

[First Embodiment]

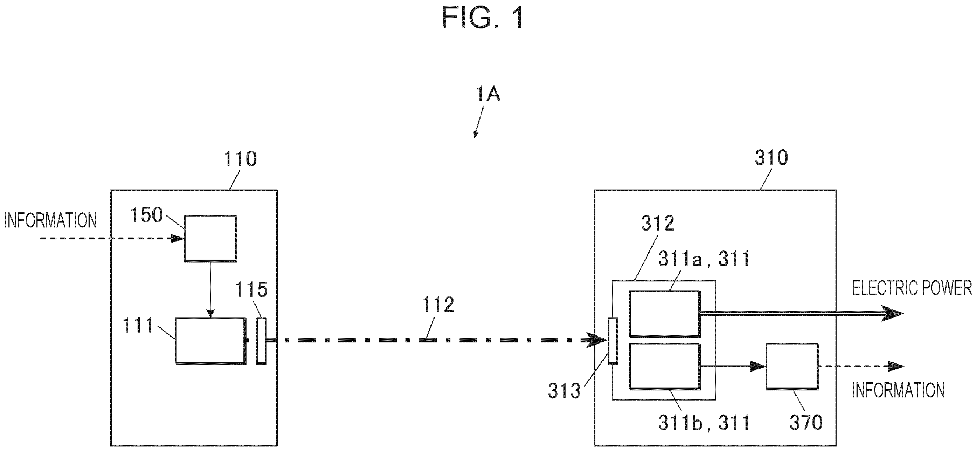

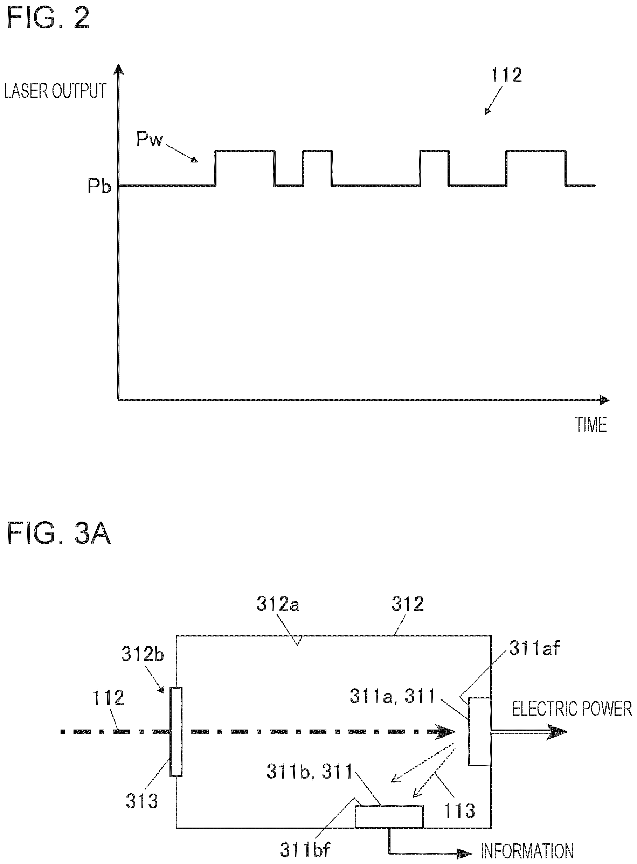

As illustrated in FIG. 1, an optical power feeding system 1A according to the present embodiment includes PSE (Power Sourcing Equipment) 110 and a PD (Powered Device) 310. The optical power feeding system 1A transmits feed light 112 generated by the PSE 110 to the PD 310 via a space. Such an optical power feeding method based on spatial transmission is called PoA (Power over Air).
In the present disclosure, the PSE is equipment that converts electric power into optical energy and supplies the optical energy, and the powered device is a device that is supplied with the optical energy and converts the optical energy into electric power. In the present disclosure, electric power and information (data) are transmitted via feed light.
The PSE 110 includes a semiconductor laser 111 for power feeding and a power feeding controller 150.
The PSE 110 is connected to a power source, and the semiconductor laser 111 for power feeding and so on are electrically driven.
The semiconductor laser 111 for power feeding uses electric power from the power source to perform laser oscillation and output the feed light 112.
The PSE 110 includes a lens 115, for example, a collimator lens. The PSE 110 transmits the feed light 112 emitted from the semiconductor laser 111 for power feeding to a space through the lens 115. Note that when the spread of the feed light 112 is small or the like, the lens 115 may be omitted.
The power feeding controller 150 controls laser oscillation of the semiconductor laser 111 for power feeding to control outputting of the feed light 112. The power feeding controller 150 pulse-modulates a laser output of the feed light 112 to superimpose information on the feed light 112. Specifically, as illustrated in FIG. 2, based on information to be transmitted, the power feeding controller 150 changes the output of the feed light 112 in a pulse form to generate an output changing portion Pw having a pulse waveform. At this time, the power feeding controller 150 superimposes the output changing portion Pw having the pulse waveform on a predetermined base output (fundamental output) Pb while maintaining the base output Pb. Note that the base output Pb need not be constant.

Although FIG. 2 illustrates an example of a binarized laser output. However, higher-order digital modulation with more values or analog modulation may be performed.

The information to be superimposed on the feed light 112 is not particularly limited. For example, the information may be a signal for notifying the PD 310 of a power transmission state of the PSE 110 (e.g., an upcoming increase in an amount of power feeding), a signal for controlling a device (or an external device) of the PD 310, or the like.

The PD 310 includes a light receiving chamber 312 that receives the feed light 112 from the PSE 110.

The light receiving chamber 312 includes a lens 313 such as a parallel flat plate or a condensing lens having no power at an opening 312b of a wall adjacent to the PSE 110. The feed light 112 from the PSE 110 passes through the lens 313, and enters the light receiving chamber 312. Note that the light receiving chamber 312 may not include the lens 313, and the feed light 112 may directly enter inside of the light receiving chamber 312.

As illustrated in FIG. 3A, the light receiving chamber 312 accommodates therein two light receivers 311 (a first light receiver 311a and a second light receiver 311b), which are photoelectric conversion elements.

Among these light receivers, the first light receiver 311a is disposed at a portion facing the lens 313 (the opening 312b) in the light receiving chamber 312. The feed light 112 that has transmitted through the lens 313 and has entered the light receiving chamber 312 is first incident on the first light receiver 311a. The first light receiver 311a converts the feed light 112 incident on a light receiving surface 311af thereof into electric power. The electric power obtained by the first light receiver 311a through the conversion is used as driving electric power needed in the PD 310. The PD 310 may also output, for an external device, the electric power obtained by the first light receiver 311a through the conversion.

In the light receiving chamber 312, the second light receiver 311b is disposed at a lateral-side wall relative to the first light receiver 311a in the vicinity of the first light receiver 311a. The second light receiver 311b converts the feed light 112 (reflected light 113) that has been reflected by the light receiving surface 311af of the first light receiver 311a and incident on a light receiving surface 311bf of the second light receiver 311b into an electrical signal. As a result, a residual part (i.e., the reflected light 113) of the feed light 112 that has not been converted into electric power by the first light receiver 311a is converted by the second light receiver 311b, and an electrical signal having a pulse signal corresponding to the output changing portion Pw is obtained.

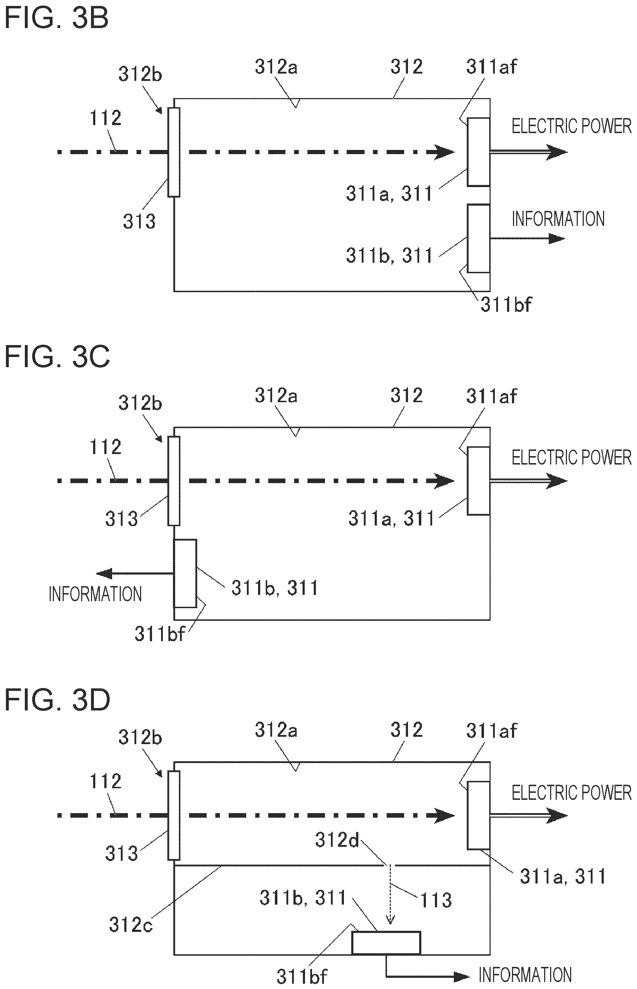

Note that the position of the second light receiver 311b in the light receiving chamber 312 is not particularly limited as long as the reflected light 113 is incident on the position. For example, the second light receiver 311b may be disposed in parallel with the first light receiver 311a as illustrated in FIG. 3B, or may be disposed on a wall facing the first light receiver 311a as illustrated in FIG. 3C.

As illustrated in FIG. 3D, the light receiving chamber 312 may be provided therein with a partition wall 312c partitioning between the first light receiver 311a and the second light receiver 311b. The position of the second light receiver 311b may be on any wall of the light receiving chamber 312 that is on a side opposite to the first light receiver 311a with the partition wall 312c interposed therebetween. The partition wall 312c includes a light guide 312d that allows the reflected light 113 to pass therethrough. The light guide 312d is, for example, a through-hole such as a pin hole. An optical system for condensing the reflected light 113 passing through the light guide 312d to the second light receiver 311b may be provided in the vicinity of the light guide 312d.

An inner wall surface 312a of the light receiving chamber 312 is a satin finished surface having lots of unevenness to diffuse light. Instead of (or in addition to) making the inner wall surface 312a be the satin finished surface, the inner wall surface 312a may have a color with a high light absorptance (or low light reflectance). The coloring method is not particularly limited. Here, the "color with a high light absorptance" includes, for example, black or a color similar to black. The inner wall surface 312a may just include the area of the satin finished surface or the color with a high absorptance in at least part thereof and need not include the area in the entirety thereof.

The second light receiver 311b (photoelectric conversion element) outputs electricity at a resolution corresponding to the intensity of light. This may make it difficult to extract information when the incident light is too strong. Therefore, the reflected light 113 is diffused or absorbed by the inner wall surface 312a that is the satin finished surface or has the color with a high absorptance to be appropriately weakened. This allows the information to be suitably extracted at the second light receiver 311b. In this case, a configuration for determining the degree of diffusion or absorption by the inner wall surface 312a (such as a specific configuration of unevenness on the satin finished surface or a color density) may be in accordance with the photoelectric conversion characteristics of the second light receiver 311b, including the above-described positional relationship between the second light receiver 311b and the first light receiver 311a. Photoelectric conversion at the second light receiver 311b is detected based on a voltage in an area where light is weak, and is detected based on a current in an area where light is strong. In this way, information may be extracted more suitably.

Note that the second light receiver 311b may be any light receiver that converts the feed light 112 that has entered the PD 310 into an electrical signal. That is, the feed light 112 incident on the second light receiver 311b is not limited to light reflected by the light receiving surface 311af of the first light receiver 311a.

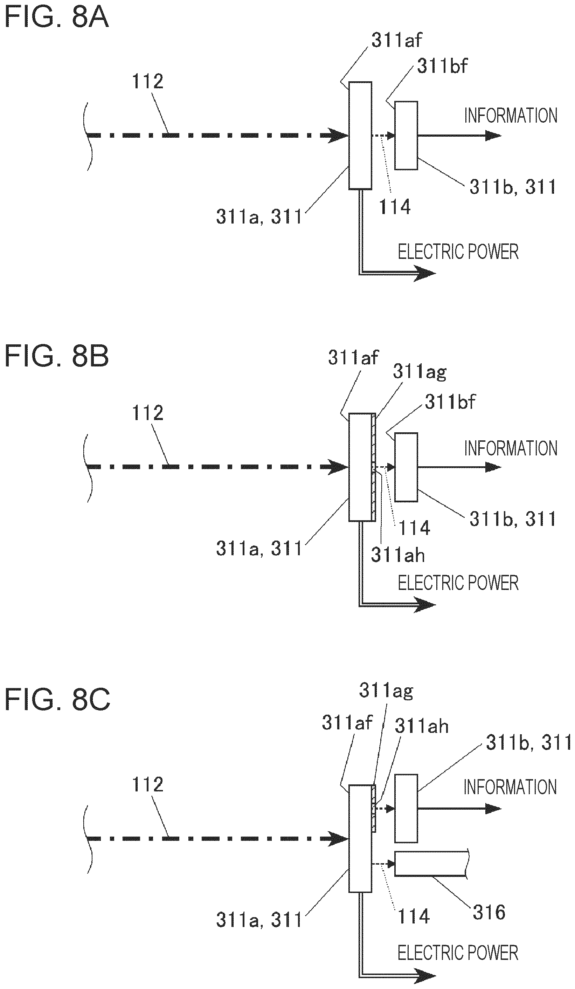

For example, as illustrated in FIG. 8A, the second light receiver 311b may convert the feed light 112 (transmitted light 114) transmitted through (the light receiving surface 311af of) the first light receiver 311a into an electrical signal.

In this case, the second light receiver 311b is disposed, for example, on a back surface side of the first light receiver 311a (on a side opposite to the light receiving surface 311af) to be in the vicinity of (or in contact with) the first light receiver 311a. Thus, the second light receiver 311b converts the transmitted light 114 leaking from the back surface of the first light receiver 311a to obtain an electrical signal. The position of the second light receiver 311b is not particularly limited as long as the transmitted light 114 is incident on the position, and may be, for example, on a lateral side of the first light receiver 311a. The second light receiver 311b may be smaller than the first light receiver 311a in size.

As illustrated in FIG. 8B, the first light receiver 311a may be provided with a light shielding plate 311ag (including a reflective plate or the like) at the back surface thereof. The light shielding plate 311ag may include a hole 311ah such as a pin hole or a slit. The light shielding plate 311ag may be disposed between the first light receiver 311a and the second light receiver 311b. Thus, the transmitted light 114 is caused to pass through the hole 311ah, and the position and the like of the transmitted light 114 can be controlled.

As illustrated in FIG. 8C, the transmitted light 114 from the hole 311ah of the light shielding plate 311ag may be incident on the second light receiver 311b, and the transmitted light 114 from an area other than the light shielding plate 311ag may be incident on an optical waveguide 316. The transmitted light 114 may be guided (condensed) to a light incident surface of the optical waveguide 316. Thus, the transmitted light 114 that is the residual part other than the light incident on the second light receiver 311b can be used as another signal source. In this case, a shutter (not illustrated) may be disposed between the optical waveguide 316 and the first light receiver 311a, and may be opened or closed to superimpose information on the transmitted light 114.

As illustrated in FIG. 1, the PD 310 further includes a demodulation circuit 370 outside the light receiving chamber 312.

The demodulation circuit 370 demodulates the electrical signal converted from the feed light 112 by the second light receiver 311b (i.e., the pulse signal corresponding to the output changing portion Pw), and acquires the information superimposed on the feed light 112 in advance. The acquired information is output to a controller or the like of the PD 310 or output to an external device in accordance with contents of the information.

The semiconductor laser 111 for power feeding and the two light receivers 311 are each a photoelectric conversion element including a laser medium of a laser wavelength of 500 nm or shorter. More specifically, semiconductor materials of semiconductor regions that exhibit a light-electricity conversion effect of the semiconductor laser 111 for power feeding and the two light receivers 311 are semiconductors having a short laser wavelength of 500 nm or shorter.

The semiconductors having a short laser wavelength have a large band gap and a high photoelectric conversion efficiency. Thus, the photoelectric conversion efficiency on the power-generating side and the powered side of optical power feeding increases, and consequently the optical power feeding efficiency increases.

Therefore, the semiconductor materials to be used may be, for example, semiconductor materials that are laser media of a laser wavelength (fundamental wave) of 200 to 500 nm such as diamond, gallium oxide, aluminum nitride, and gallium nitride.

The semiconductor materials to be used may be semiconductors having a band gap of 2.4 eV or greater.

For example, semiconductor materials that are laser media of a band gap of 2.4 to 6.2 eV such as diamond, gallium oxide, aluminum nitride, and gallium nitride may be used.

Laser light of a longer wavelength tends to have a higher transmission efficiency. Laser light of a shorter wavelength tends to have a higher photoelectric conversion efficiency. Thus, for long-distance transmission, a semiconductor material that is a laser medium of a laser wavelength (fundamental wave) longer than 500 nm may be used. When the photoelectric conversion efficiency is prioritized, a semiconductor material that is a laser medium of a laser wavelength (fundamental wave) shorter than 200 nm may be used.

These semiconductor materials may be used in at least one selected from the group consisting of the semiconductor laser 111 for power feeding and the two light receivers 311. The photoelectric conversion efficiency increases on the power-sourcing side or the powered side, and consequently the optical power feeding efficiency increases.

As described above, according to the first embodiment, the feed light 112 incident on the first light receiver 311a is converted into electric power by the first light receiver 311a. On the other hand, the feed light 112 incident on the second light receiver 311b is converted into an electrical signal by the second light receiver 311b. This electrical signal is then demodulated by the demodulation circuit 370, and the information superimposed on the feed light 112 in advance is acquired.

Thus, electric power and information can be simultaneously transmitted via the feed light 112.

According to the present embodiment, the second light receiver 311b converts the feed light 112 (the reflected light 113) reflected by the light receiving surface 311af of the first light receiver 311a into an electrical signal.

Thus, while a major part of the feed light 112 is suitably converted into electric power by the first light receiver 311a, information can be suitably extracted from the residual part (that is, the reflected light 113) that has not been converted into electric power by the first light receiver 311a.

According to the present embodiment, the first light receiver 311a and the second light receiver 311b are accommodated in the same light receiving chamber 312.

Thus, the first light receiver 311a and the second light receiver 311b can be disposed in the vicinity of each other, and the reflected light 113 reflected by the first light receiver 311a can be suitably incident on the second light receiver 311b.

According to the present embodiment, the inner wall surface 312a of the light receiving chamber 312 has unevenness to diffuse light, a color with a high light absorptance, or both the unevenness and the color.

Thus, the reflected light 113 reflected by the first light receiver 311a can be diffused or absorbed by the inner wall surface 312a to be suitably weakened. Thus, the reflected light 113 having an intensity corresponding to the photoelectric conversion characteristics of the second light receiver 311b can be incident on the second light receiver 311b, and consequently the information can be suitably extracted from the reflected light 113.

According to the present embodiment, in the feed light 112, the output changing portion Pw into which the information is modulated is superimposed on the predetermined base output Pb.

Thus, at least electric power corresponding to the base output Pb can be stably acquired through photoelectric conversion of the feed light 112 at the first light receiver 311a.

According to the present embodiment, the second light receiver 311b may convert the feed light 112 (the transmitted light 114) transmitted through the light receiving surface 311af of the first light receiver 311a into an electrical signal.

Thus, while a major part of the feed light 112 is suitably converted into electric power by the first light receiver 311a, information can be suitably extracted from the residual part (that is, the transmitted light 114) that has not been converted into electric power by the first light receiver 311a.

In this case, the second light receiver 311b can be arranged in the vicinity of the first light receiver 311a. Consequently, the PD 310 can be made compact.

In this case, since the transmitted light 114 from the first light receiver 311a is easily incident on the second light receiver 311b, the second light receiver 311b that is smaller than the first light receiver 311a can be used. Consequently, the second light receiver 311b having a higher reaction speed can be used.

According to the present embodiment, the light shielding plate 311ag disposed between the first light receiver 311a and the second light receiver 311b may include the hole 311ah through which the feed light 112 (the transmitted light 114) transmitted through the light receiving surface 311af of the first light receiver 311a passes.

Thus, the transmitted light 114 passes through the hole 311ah, and the position and the like of the transmitted light 114 can be suitably controlled.

According to the present embodiment, the feed light 112 (the transmitted light 114) transmitted through the light receiving surface 311af of the first light receiver 311a may be incident on the optical waveguide 316.

Thus, the transmitted light 114 can be used as another signal source.

[Second Embodiment]

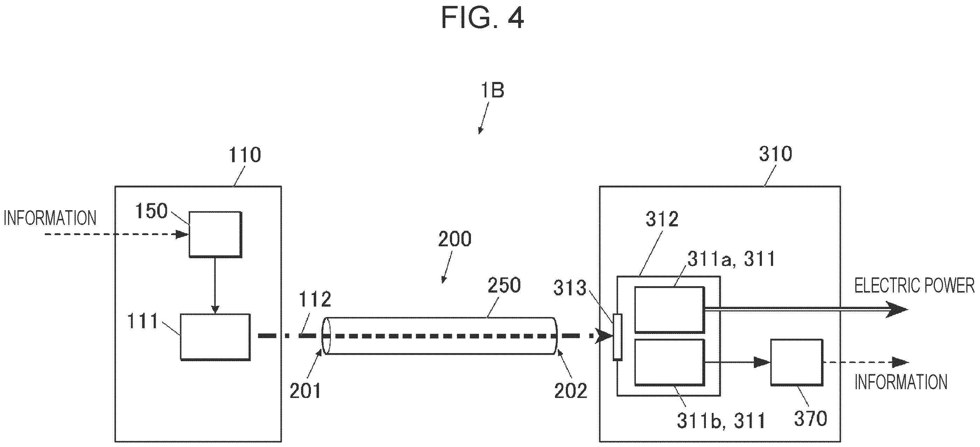

As illustrated in FIG. 4, an optical power feeding system 1B of the present embodiment includes the PSE 110, an optical fiber cable 200, and the PD 310. The optical power feeding system 1B transmits the feed light 112 generated by the PSE 110 to the PD 310 through the optical fiber cable 200. Such an optical power feeding method is called PoF (Power over Fiber). The optical power feeding system 1B of the present embodiment is different from that of the first embodiment in that the feed light 112 is transmitted through the optical fiber cable 200.

The optical fiber cable 200 includes an optical fiber 250 that forms a channel of feed light.

The optical fiber cable 200 has one end 201 connectable to the PSE 110 and an other end 202 connectable to the PD 310, and transmits the feed light 112.

In the PSE 110, the power feeding controller 150 pulse-modulates a laser output of the feed light 112, and outputs the feed light 112 on which information is superimposed. The feed light 112 from the PSE 110 is input to the one end 201 of the optical fiber cable 200, propagates through the optical fiber 250, and is output from the other end 202 to the PD 310.

The feed light 112 output from the optical fiber cable 200 to the PD 310 is incident on the first light receiver 311a in the light receiving chamber 312, and is converted into electric power. Of the feed light 112 that has entered the light receiving chamber 312, the light (the reflected light 113) reflected by the light receiving surface 3 11af of the first light receiver 311a is converted into an electrical signal by the second light receiver 311b, and is demodulated by the demodulation circuit 370, so that the information superimposed on the feed light 112 in advance is acquired.

As a semiconductor material of a semiconductor region that exhibits a light-electricity conversion effect, the semiconductor laser 111 for power feeding and the two light receivers 311 each include a material that is the same as and/or similar to that of the first embodiment. Thus, a high optical power feeding efficiency is implemented.

With the optical power feeding system 1B configured as described above, effects that are the same as and/or similar to those of the first embodiment can be obtained.

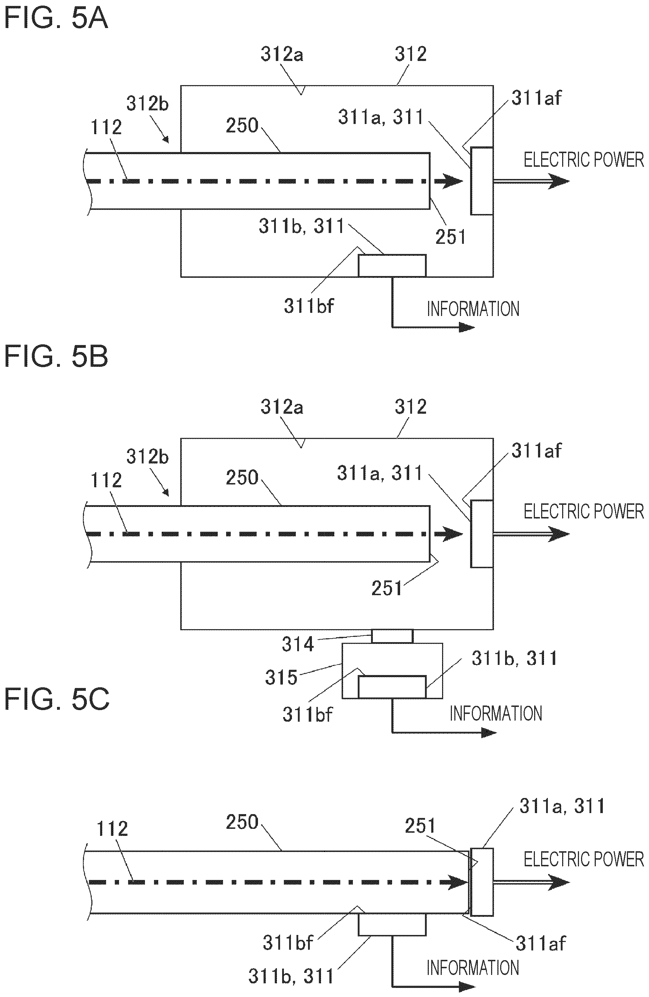

As illustrated in FIG. 5A, the optical fiber 250 may be inserted into the light receiving chamber 312 (for example, up to a point immediately before the first light receiver 311a). A light exit surface 251 of the optical fiber 250 directly faces the light receiving surface 311af of the first light receiver 311a. That is, an exit direction of the light from the light exit surface 251 is substantially orthogonal to the light receiving surface 311af. However, the exit direction of the light from the light exit surface 251 may be inclined relative to the light receiving surface 311af of the first light receiver 311a.

As illustrated in FIG. 5B, the second light receiver 311b may be accommodated in a second light receiving chamber 315 coupled to the light receiving chamber 312 through a coupling optical path 314 through which light propagates. Inner wall surfaces of the coupling optical path 314 and the second light receiving chamber 315 each may be a satin finished surface having unevenness and/or have a color with a high light absorptance, similarly to the inner wall surface 312a of the light receiving chamber 312.

Alternatively, as illustrated in FIG. 5C, the optical fiber 250 and the two light receivers 311 may be directly coupled to each other without providing the light receiving chamber 312. In this case, the light receiving surface 311af of the first light receiver 311a faces the light exit surface 251 of the optical fiber 250 in the vicinity of the light exit surface 251. The light receiving surface 311bf of the second light receiver 311b faces a waveguide portion of the optical fiber 250, the waveguide portion being upstream of the light exit surface 251 in terms of the feed light 112.

With such a configuration, the light receiving chamber 312 can be omitted and the configuration can be simplified, and the second light receiver 311b can be disposed relatively freely in a longitudinal direction of the optical fiber 250.

The second light receiver 311b may be disposed at a position where the light (the feed light 112) radiated to the first light receiver 311a from the optical fiber 250 can be suitably avoided (is not blocked).

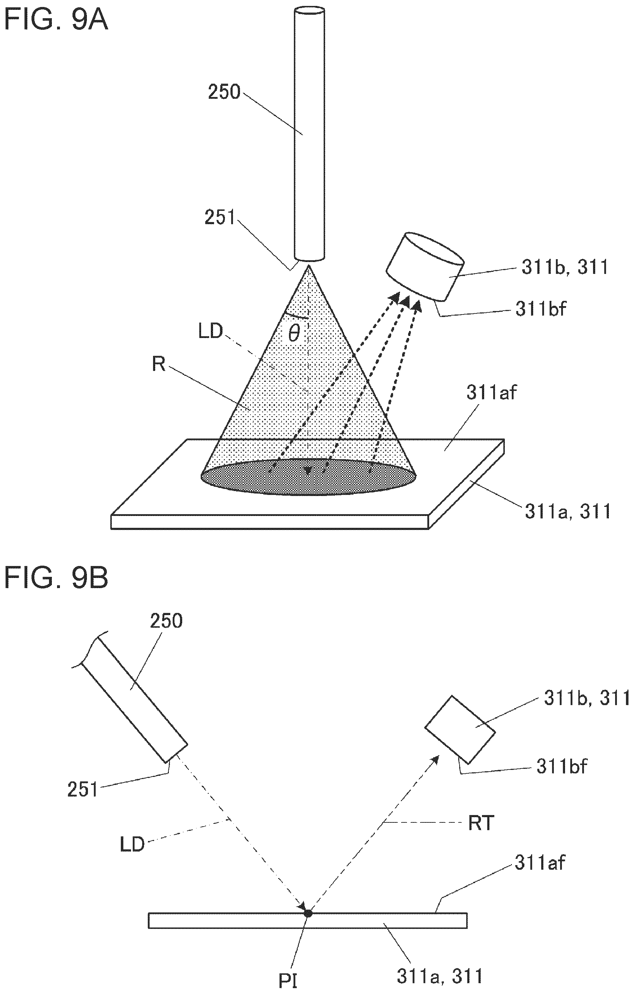

Specifically, as illustrated in FIG. 9A, the second light receiver 311b may be disposed outside a radiation range R of the light radiated from the light exit surface 251 of the optical fiber 250. The radiation range R is a conical range having a central axis that is an exit direction LD of the light from the light exit surface 251 of the optical fiber 250 and having a vertex angle that is twice an exit angle θ of the light. The exit angle θ is defined by Equation (1) below.

$$NA = n \cdot \sin\theta \cdots (1),$$

where
NA denotes a numerical aperture of the optical fiber 250, and n denotes a refractive index of air ($\approx$ 1).

As illustrated in FIG. 9B, the second light receiver 311b may be disposed at a position that is as close as possible to a reflection trajectory RT of light that exits from the light exit surface 251 of the optical fiber 250 in the exit direction LD (exit center) and is regularly reflected by the light receiving surface 311af. In the present embodiment, the second light receiver 311b is disposed within a predetermined distance from the reflection trajectory RT.

Thus, the reflected light 113 distributed more on the reflection trajectory RT can be suitably incident on the second light receiver 311b, and an amount of light received by the second light receiver 311b can be increased.

FIG. 9B illustrates the exit direction LD inclined relative to the light receiving surface 311af for ease of understanding. However, the exit direction LD and the reflection trajectory RT substantially coincide with each other when the exit direction LD is orthogonal to the light receiving surface 311af.

The second light receiver 311b may be disposed at a position as close as possible to an intersection PI of the light receiving surface 311af and the exit direction LD of the light from the light exit surface 251 of the optical fiber 250.

Thus, the reflected light 113 distributed more around the intersection PI of the light receiving surface 311af and the exit direction LD of the light can be suitably incident on the second light receiver 311b, and an amount of light received by the second light receiver 311b can be increased.

[Third Embodiment]

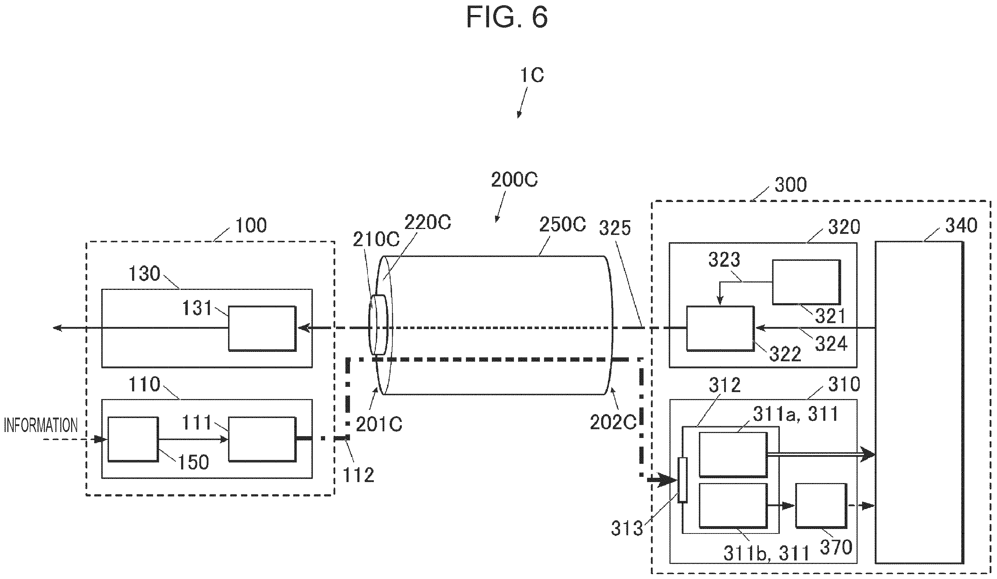

As illustrated in FIG. 6, an optical power feeding system 1C of the present embodiment includes a power feeding system and an optical communication system through an optical fiber. The optical power feeding system 1C includes a first data communication apparatus 100 including the PSE (Power Sourcing Equipment) 110, an optical fiber cable 200C, and a second data communication apparatus 300 including the PD (Powered Device) 310.

The PSE 110 includes the semiconductor laser 111 for power feeding and the power feeding controller 150. The first data communication apparatus 100 includes, in addition to the PSE 110, a receiver 130. The first data communication apparatus 100 corresponds to DTE (Data Terminal Equipment), a repeater, or the like. The receiver 130 includes a photodiode 131 for signals.

The optical fiber cable 200C includes an optical fiber 250C including a core 210C that forms a channel of signal light, and a cladding 220C that is disposed around an outer periphery of the core 210C and forms a channel of feed light.

The PD 310 includes the demodulation circuit 370 and the light receiving chamber 312 that accommodates the two light receivers 311. The second data communication apparatus 300 includes, in addition to the PD 310, a transmitter 320 and a data processing unit 340. The second data communication apparatus 300 corresponds to a power end station or the like. The transmitter 320 includes a semiconductor laser 321 for signals and a modulator 322. The data processing unit 340 processes a received signal. The second data communication apparatus 300 is a node in a power feeding network. Alternatively, the second data communication apparatus 300 may be a node that communicates with another node.

The first data communication apparatus 100 is connected to a power source, and the semiconductor laser 111 for power feeding, the photodiode 131 for signals, and so on are electrically driven. The first data communication apparatus 100 is a node in the power feeding network. Alternatively, the first data communication apparatus 100 may be a node that communicates with another node.

The semiconductor laser 111 for power feeding uses electric power from the power source to perform laser oscillation and output the feed light 112. At this time, the power feeding controller 150 controls laser oscillation of the semiconductor laser 111 for power feeding to pulse-modulate the laser output of the feed light 112 and thus superimpose information on the feed light 112.

The first light receiver 311a converts the feed light 112 transmitted through the optical fiber cable 200C into electric power. The obtained electric power is used as driving electric power for the transmitter 320 and the data processing unit 340 and as other driving electric power needed in the second data communication apparatus 300. The second data communication apparatus 300 may also output, for an external device, the obtained electric power.

The second light receiver 311b converts the feed light 112 (the reflected light 113) reflected by the light receiving surface 311af of the first light receiver 311a into an electrical signal. The demodulation circuit 370 demodulates the electrical signal converted by the second light receiver 311b and extracts the information superimposed on the feed light 112 in advance. The acquired information is output to the data processing unit 340 or an external device in accordance with contents of the information.

The data processing unit 340 transmits input data to a node. On the other hand, the data processing unit 340 receives data from the node, and outputs the data as transmission data 324 to the modulator 322.

The modulator 322 of the transmitter 320 modulates, based on the transmission data 324, laser light 323 output from the semiconductor laser 321 for signals into signal light 325, and outputs the signal light 325.

The photodiode 131 for signals of the receiver 130 demodulates the signal light 325 transmitted through the optical fiber cable 200C into an electrical signal, and outputs the electrical signal. Data based on the electrical signal is transmitted to a node. Data from the node may be used as information to be superimposed on the feed light 112 through control of the semiconductor laser 111 for power feeding by the power feeding controller 150.

The feed light 112 from the first data communication apparatus 100 is input to one end 201C of the optical fiber cable 200C, propagates through the cladding 220C, and is output from an other end 202C to the second data communication apparatus 300.

The signal light 325 from the second data communication apparatus 300 is input to the other end 202C of the optical fiber cable 200C, propagates through the core 210C, and is output from the one end 201C to the first data communication apparatus 100.

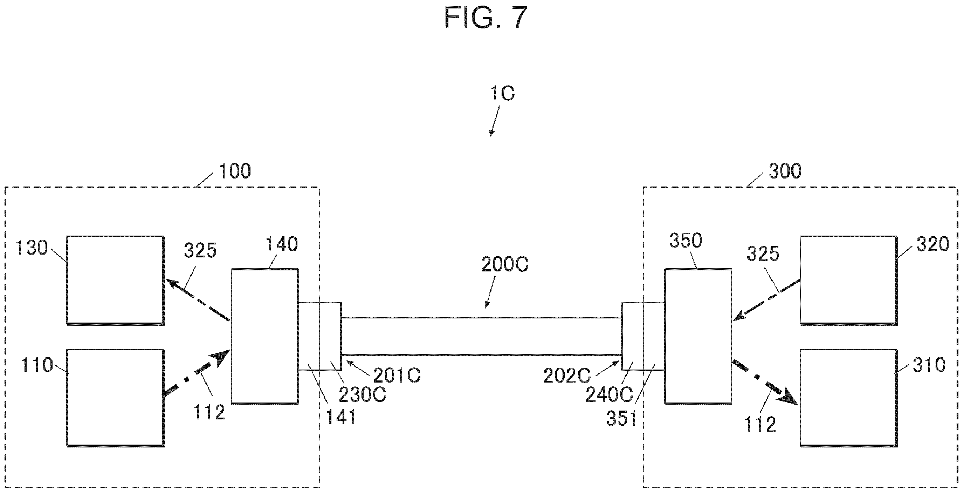

As illustrated in FIG. 7, the first data communication apparatus 100 is provided with a light input/output part 140 and an optical connector 141 attached to the light input/output part 140. The second data communication apparatus 300 is provided with a light input/output part 350 and an optical connector 351 attached to the light input/output part 350. The optical connector 141 is connected to an optical connector 230C disposed at the one end 201C of the optical fiber cable 200C. The optical connector 351 is connected to an optical connector 240C disposed at the other end 202C of the optical fiber cable 200C. The light input/output part 140 guides the feed light 112 to the cladding 220C, and guides the signal light 325 to the receiver 130. The light input/output part 350 guides the feed light 112 to the PD 310, and guides the signal light 325 to the core 210C.

As described above, the one end 201C of the optical fiber cable 200C is connectable to the first data communication apparatus 100, and the other end 202C of the optical fiber cable 200C is connectable to the second data communication apparatus 300, and the optical fiber cable 200C transmits the feed light 112. In the present embodiment, the optical fiber cable 200C transmits the signal light 325.

As a semiconductor material of a semiconductor region that exhibits a light-electricity conversion effect, the semiconductor laser 111 for power feeding and the two light receivers 311 each include a material that is the same as and/or similar to that of the first embodiment. Thus, a high optical power feeding efficiency is implemented.

Note that an optical fiber for transmitting the signal light 325 and an optical fiber for transmitting the feed light 112 may be provided separately. The optical fiber cable 200C may include a plurality of optical fiber cables.

One of the signal light 325 and the feed light 112 may be transmitted via a space by the PoA method, and the other may be transmitted through an optical fiber by the PoF method.

The feed light 112 may be transmitted through an optical fiber in a part of the section, and may be transmitted via a space in another part of the section. A lens such as a collimator lens may be disposed at a start end of the spatial transmission section. A lens such as a condensing lens or a diffusing lens may be disposed at a terminal end of the optical fiber transmission section.

The embodiments of the present disclosure have been described above. However, the contents of the present disclosure are not limited to the embodiments described above. Details and the like presented in the embodiments can be appropriately changed without departing from the spirit of the invention.

An embodiment of the present disclosure is presented below. In an embodiment,

(1) A powered device includes

a first light receiver configured to convert feed light incident thereon into electric power;
a second light receiver configured to convert the feed light reflected by a light receiving surface of the first light receiver into an electrical signal; and
a demodulator configured to demodulate the electrical signal converted by the second light receiver, and acquire information, in which the information is superimposed on the feed light in advance by modulation.

(2) The powered device according to (1) includes

a light receiving chamber accommodating the first light receiver and the second light receiver therein, in which
the light receiving chamber includes an opening at a portion facing the light receiving surface of the first light receiver, the opening allowing the feed light to be incident therethrough from outside.

(3) In the powered device according to (2), an inner wall surface of the light receiving chamber has unevenness to diffuse light, a color with a high light absorptance, or both the unevenness and the color.

(4) In the powered device according to any one of (1) to (3),
in the feed light, an output changing portion to which the information is modulated is superimposed on a predetermined fundamental output.

(5) The powered device according to any one of (1) to (4) includes

an optical fiber configured to transmit the feed light, in which
the light receiving surface of the first light receiver faces a light exit surface of the optical fiber, and
a light receiving surface of the second light receiver faces a waveguide portion of the optical fiber, the waveguide portion being upstream of the light exit surface in terms of the feed light.

(6) In the powered device according to any one of (1) to (5),
the first light receiver and the second light receiver are each a photoelectric conversion element including a laser medium of a laser wavelength of 500 nm or shorter.

(7) An optical power feeding system includes:

power sourcing equipment; and
a powered device,
the power sourcing equipment being configured to output feed light on which information is superimposed by modulation,
the powered device including:

a first light receiver configured to convert the feed light incident thereon into electric power;
a second light receiver configured to convert the feed light reflected by a light receiving surface of the first light receiver into an electrical signal; and
a demodulator configured to demodulate the electrical signal converted by the second light receiver, and acquire the information.

(8) A power receiving method comprising:

at a first light receiver, receiving feed light on which information is superimposed in advance by modulation, and converting the feed light into electric power;
at a second light receiver, receiving the feed light reflected by a light receiving surface of the first light receiver, and converting the feed light into an electrical signal; and
demodulating the electrical signal converted at the second light receiver, and acquiring the information.

INDUSTRIAL APPLICABILITY

As described above, the present invention is useful for simultaneous transmission of electric power and information via feed light.

REFERENCE SIGNS

1A, 1B, 1C optical power feeding system
110 power sourcing equipment
111 semiconductor laser for power feeding
112 feed light
113 reflected light
114 transmitted light
150 power feeding controller
250, 250C optical fiber

251 light exit surface
310 powered device
311 light receiver
311a first light receiver
311af light receiving surface
311ag light shielding plate
311ah hole
311b second light receiver
311 bf light receiving surface
312 light receiving chamber
312a inner wall surface
312b opening
316 optical waveguide
370 demodulation circuit (demodulator)
Pb base output (fundamental output)
Pw output changing portion
R radiation range
θ exit angle

**Claims**

1.  A powered device comprising:

    a first light receiver configured to convert feed light incident thereon into electric power;
    a second light receiver configured to convert the feed light into an electrical signal; and
    a demodulator configured to demodulate the electrical signal converted by the second light receiver, and acquire information, wherein
    the information is superimposed on the feed light in advance by modulation.

2.  The powered device according to claim 1, wherein the second light receiver is configured to convert the feed light reflected by a light receiving surface of the first light receiver into the electrical signal.

3.  The powered device according to claim 2, comprising:

    a light receiving chamber accommodating the first light receiver and the second light receiver therein, wherein
    the light receiving chamber comprises an opening at a portion facing the light receiving surface of the first light receiver, the opening allowing the feed light to be incident therethrough from outside.

4.  The powered device according to claim 3, wherein an inner wall surface of the light receiving chamber has unevenness to diffuse light, a color with a high light absorptance, or both the unevenness and the color.

5.  The powered device according to any one of claims 2 to 4, comprising:

    an optical fiber configured to transmit the feed light, wherein
    the light receiving surface of the first light receiver faces a light exit surface of the optical fiber, and
    a light receiving surface of the second light receiver faces a waveguide portion of the optical fiber, the waveguide portion being upstream of the light exit surface in terms of the feed light.

6.  The powered device according to any one of claims 2 to 5, comprising:

    an optical fiber configured to transmit the feed light to the first light receiver, wherein
    the second light receiver is disposed outside a radiation range of light radiated from a light exit surface of the optical fiber, and
    the radiation range is a conical range having a vertex angle that is twice an exit angle θ defined by Equation (1) below,

    $$NA = n \cdot \sin\theta \ \cdots \ (1),$$

    where

    NA: a numerical aperture of the optical fiber, and
    n: a refractive index of air.

7.  The powered device according to claim 1, wherein the second light receiver is configured to convert the feed light transmitted through a light receiving surface of the first light receiver into the electrical signal.

8.  The powered device according to claim 7, comprising:

    a light shielding plate disposed between the first light receiver and the second light receiver, wherein
    the light shielding plate comprises a hole through which the feed light transmitted through the light receiving surface of the first light receiver passes.

9.  The powered device according to claim 7 or 8, comprising:
    an optical waveguide on which the feed light transmitted through the light receiving surface of the first light receiver is incident.

10. The powered device according to any one of claims 1 to 9, wherein in the feed light, an output changing portion to which the information is modulated is superimposed on a predetermined fundamental output.

11. The powered device according to any one of claims 1 to 10, wherein the first light receiver and the second light receiver are each a photoelectric conversion element including a laser medium of a laser wavelength of 500 nm or shorter.

12. An optical power feeding system comprising:

power sourcing equipment; and
a powered device,
the power sourcing equipment being configured to output feed light on which information is superimposed by modulation,
the powered device comprising:

a first light receiver configured to convert the feed light incident thereon into electric power;
a second light receiver configured to convert the feed light reflected by a light receiving surface of the first light receiver into an electrical signal; and
a demodulator configured to demodulate the electrical signal converted by the second light receiver, and acquire the information.

13. An optical power feeding system comprising:

power sourcing equipment; and
a powered device,
the power sourcing equipment being configured to output feed light on which information is superimposed by modulation,
the powered device comprising:

a first light receiver configured to convert the feed light incident thereon into electric power;
a second light receiver configured to convert the feed light transmitted through a light receiving surface of the first light receiver into an electrical signal; and
a demodulator configured to demodulate the electrical signal converted by the second light receiver, and acquire the information.

14. A power receiving method comprising:

at a first light receiver, receiving feed light on which information is superimposed in advance by modulation, and converting the feed light into electric power;
at a second light receiver, receiving the feed light reflected by a light receiving surface of the first light receiver, and converting the feed light into an electrical signal; and
demodulating the electrical signal converted at the second light receiver, and acquiring the information.

15. A power receiving method comprising:

at a first light receiver, receiving feed light on which information is superimposed in advance by modulation, and converting the feed light into electric power;
at a second light receiver, receiving the feed light transmitted through a light receiving surface of the first light receiver, and converting the feed light into an electrical signal; and
demodulating the electrical signal converted at the second light receiver, and acquiring the information.

FIG. 1

FIG. 2

FIG. 3A

## FIG. 3B

## FIG. 3C

## FIG. 3D

# FIG. 4

1B

110

INFORMATION

150

111

112

201

200

250

202

310

312

311a, 311

313

311b, 311

370

ELECTRIC POWER

INFORMATION

FIG. 5A

FIG. 5B

FIG. 5C

FIG. 6

# FIG. 7

EP 4 542 881 A1

FIG. 8A

311af
311bf
112
INFORMATION
311b, 311
311a, 311
114
ELECTRIC POWER

FIG. 8B

311af
311ag
311bf
112
INFORMATION
311b, 311
311a, 311
114
311ah
ELECTRIC POWER

FIG. 8C

311ag
311af
311ah
311b, 311
112
INFORMATION
311a, 311
114
316
ELECTRIC POWER

## FIG. 9A

## FIG. 9B

## INTERNATIONAL SEARCH REPORT

International application No.

**PCT/JP2023/020041**

### A. CLASSIFICATION OF SUBJECT MATTER

*H04B 10/80*(2013.01)i; *G02B 6/42*(2006.01)i; *H02J 50/30*(2016.01)i
FI:  H04B10/80 160; H02J50/30; G02B6/42

According to International Patent Classification (IPC) or to both national classification and IPC

### B. FIELDS SEARCHED

Minimum documentation searched (classification system followed by classification symbols)

H04B10/80; G02B6/42; H02J50/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/075164 A1 (KYOCERA CORPORATION) 22 April 2021 (2021-04-22) | 1 |
| | paragraphs [0008]-[0035], fig. 1-5 | |
| Y | paragraphs [0008]-[0035], fig. 1-5 | 7-11, 13, 15 |
| A | paragraphs [0008]-[0035], fig. 1-5 | 2-6, 12, 14 |
| Y | JP 2019-140595 A (THE UNIVERSITY OF ELECTRO-COMMUNICATIONS) 22 August 2019 (2019-08-22) | 7-11, 13, 15 |
| | paragraphs [0027]-[0030], fig. 3, 6 | |
| A | paragraphs [0027]-[0030], fig. 3, 6 | 2-6, 12, 14 |
| A | WO 2021/079704 A1 (KYOCERA CORPORATION) 29 April 2021 (2021-04-29) | 1-15 |
| | paragraphs [0036]-[0048], fig. 7-8 | |
| A | WO 2021/079822 A1 (KYOCERA CORPORATION) 29 April 2021 (2021-04-29) | 1-15 |
| | entire text, all drawings | |
| A | JP 2020-010205 A (OI ELECTRIC CO., LTD.) 16 January 2020 (2020-01-16) | 1-15 |
| | entire text, all drawings | |

☑ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 July 2023** | **08 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/020041**

**C.    DOCUMENTS CONSIDERED TO BE RELEVANT**

| Category* | Citation of document, with indication, where appropriate, of the relevant passages | Relevant to claim No. |
|---|---|---|
| P, A | WO 2022/259534 A1 (KYOTO SEMICONDUCTOR CO., LTD.) 15 December 2022 (2022-12-15)<br>        paragraphs [0015]-[0019], fig. 1-2 | 1-15 |

Form PCT/ISA/210 (second sheet) (January 2015)

**INTERNATIONAL SEARCH REPORT**

International application No.

**PCT/JP2023/020041**

**Box No. III     Observations where unity of invention is lacking (Continuation of item 3 of first sheet)**

This International Searching Authority found multiple inventions in this international application, as follows:

- Number of inventions included in the claims: 2
- Claim numbers of claims classified as each invention:
      Invention 1: Claims 1-6, 10-12, and 14
      Invention 2: Claims 7-9, 13, and 15
- The reason for which it is determined that the requirement of unity of invention is not fulfilled
   The invention as in claim 1 lacks novelty and does not involve an inventive step in light of document 1. Claim 2 is found to have the special technical feature in which "the second light receiving unit converts the feed light reflected at the light receiving surface of the first light receiving unit into electrical signals". Inventions that share the same or corresponding special technical feature with claim 2 are classified as invention 1. Meanwhile, claim 7 is found to have the special technical feature in which "the second light receiving unit converts the feed light transmitted through the light receiving surface of the first light receiving unit into electrical signals". Inventions that share the same or corresponding special technical feature with claim 7 are classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

| | International application No. |
| --- | --- |
| | **PCT/JP2023/020041** |

| Patent document cited in search report | | | Publication date (day/month/year) | Patent family member(s) | | | Publication date (day/month/year) |
| --- | --- | --- | --- | --- | --- | --- | --- |
| WO | 2021/075164 | A1 | 22 April 2021 | (Family: none) | | | |
| JP | 2019-140595 | A | 22 August 2019 | (Family: none) | | | |
| WO | 2021/079704 | A1 | 29 April 2021 | US | 2022/0094447 | A1 | |
| | | | | paragraphs [0084]-[0110], fig. 7-8 | | | |
| | | | | EP | 3926788 | A1 | |
| | | | | CN | 113544939 | A | |
| WO | 2021/079822 | A1 | 29 April 2021 | US | 2022/0021453 | A1 | |
| | | | | entire text, all drawings | | | |
| | | | | EP | 3930011 | A1 | |
| | | | | CN | 113544938 | A | |
| JP | 2020-010205 | A | 16 January 2020 | (Family: none) | | | |
| WO | 2022/259534 | A1 | 15 December 2022 | (Family: none) | | | |

Form PCT/ISA/210 (patent family annex) (January 2015)

**EP 4 542 881 A1**

## REFERENCES CITED IN THE DESCRIPTION

**Patent documents cited in the description**

- JP 2010135989 A